# EUROPEAN PATENT SPECIFICATION

(11) **EP 0 545 659 B1**
(45) Date of publication and mention of the grant of the patent: **31.07.1996**
(21) Application number: 92310924.3
(22) Date of filing: 30.11.1992
(51) Int. Cl.: C08L 27/12, C08L 83/08, C08K 5/12

(54) **Fluorohydrocarbon-fluorosilicone blends**
Fluorkohlenwasserstoff-Fluorsilicon Mischungen
Mélanges de fluorohydrocarbone-fluorosilicone

(30) Priority: 05.12.1991 US 802680
(43) Date of publication of application: 09.06.1993
(73) Proprietor: GENERAL ELECTRIC COMPANY, Schenectady, NY 12345 (US)
(72) Inventor: Evans, Edwin Robert, Clifton Park, New York 12065 (US); Waters, Lawrence George, Watervliet, New York 12189 (US)
(74) Representative: Szary, Anne Catherine

(56) References cited:
- WO-A-81/00573
- WO-A-87/01713

## Description

The present invention relates to elastomeric blends of fluorohydrocarbon and fluorosilicone which have improved low temperature physical properties. The invention further relates to a compatibility agent which effects the compatibility of the elastomers.

### BACKGROUND OF THE INVENTION

Fluorohydrocarbon-fluorosilicone blends have been used to provide tough, abrasion resistant elastomers. Blends of fluorohydrocarbons and fluorosilicones have also been used to provide a combination of physical properties, heat and fluid resistance and low temperature characteristics. Such blends are particularly useful in automotive applications where heat and chemical resistance of fluoroelastomers is required, along with improved low temperature operating capability.

As is taught in a July, 1985 technical information bulletin by 3M Corporation entitled "Fluorel® FC", blends of fluorohydrocarbons with fluorosilicones have been prepared in ratios of 80:20, respectively, and 60:40. It has been found that blends comprising 80 parts fluorohydrocarbon per 20 parts fluorosilicone exhibit better tensile strength, elongation, 100% modulus and Shore hardness than blends of 60 parts fluorohydrocarbon and 40 parts fluorosilicone. However, the 80:20 blends exhibit a brittle point of only -30°C whereas the 60:40 blends exhibit a brittle point of -43°C. Consequently, since the lower brittle point is essential for O-rings in automotive applications, the 60:40 blend is used for such applications.

Under some extreme conditions, higher physical properties may be necessary to prevent O-ring failure and extend the useful life of the O-ring. While some of the previously known compositions provide one or another physical property within a desirable range, none of these compositions yield a combination of brittle points equal to or below -35°C, Shore A strengths greater than 80, 100% moduli of near 5520 KPa (800 PSI) and above, tensile strengths of 12420 KPa (1800 PSI) and above, and elongations of near 300% and above.

A need therefore exists for an O-ring composition which provides a combination of these desired physical properties, especially brittle points of -35°C and below.

### SUMMARY OF THE INVENTION

The present invention provides fluorohydrocarbon-fluorosilicone and fluorohydrocarbon-fluorosilicone copolymer blends which exhibit both improved physical properties and low brittle points. Blends in the range of 70:30 to 75:25 exhibiting brittle points of -35° to -42°C have been prepared which show good handling, good processibility and physical properties superior to prior 60:40 blend compositions. These physical properties include Shore A strengths greater than 80, 100% moduli of near 5520 KPa (800 PSI) and above, tensile strengths of 12420 KPa (1800 PSI) and above, and elongations of near 300% and above.

The improved physical properties and lower brittle point are attributed in part to the addition of a reactive organic halogen bearing intermediate to the blend. The intermediate appears to effect the compatibility of the elastomers in the blend by acting as an interfacial wetting agent. The compatibility agent has the general formula 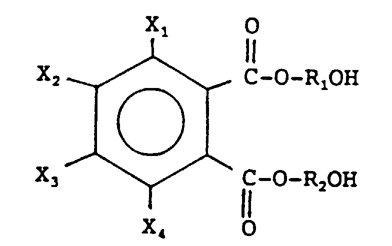 wherein X₁,X₂,X₃ and X₄ are each a halogen which may be the same as any of the others, R₁ is selected from a hydrocarbon having 2-10 carbon atoms, an ether, and an alkenyl group having 2-10 carbon atoms, and R₂ is selected from a hydrocarbon having 2-10 carbon atoms, an ether, and an alkenyl group having 2-10 carbon atoms. If either R₁ or R₂ is an ether, it preferably has a formula -R₃-O-R₄- wherein R₃ is a hydrocarbon chain having 2-10 carbon atoms, and R₄ is a hydrocarbon chain having 2-10 carbon atoms. By adding the compatibility agent, blends in the range of 50:50 to 80:20 can be produced which have good physical properties and low brittle points. Blends of the present invention may be used to form O-rings.

In one embodiment the fluorohydrocarbon has a Mooney [ML 1+10 @ 25°F (121°C)] viscosity in the range of approximately 50-60, and the blend includes PDMS polymers having a total compound vinyl weight content in the range of 0.13 to 0.20 weight percent.

### DETAILED DESCRIPTION OF THE INVENTION

The blends of the present invention, comprise fluorohydrocarbon to fluorosilicone ratios in the range of 50:50 to 80:20 with ranges of 70:30 to 75:25 being more preferred.

Ranges of 60:40 are predicted to show better results than a range of 50:50. To these blends a compatibility agent is added in the range of 1-20 parts, and more preferably in the range of 4-10 parts. Compositions having both 5 parts and 7 parts compatibility agent have produced elastomers having good physical properties and a low brittle point.

The compatibility agent is a reactive organic halogen bearing intermediate having the formula 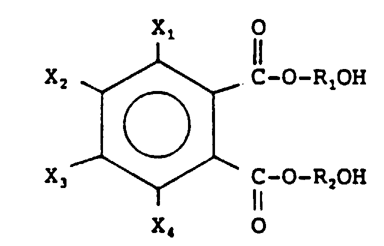 wherein X₁,X₂,X₃ and X₄ are each a halogen, which may be the same as any of the others; R₁ is a hydrocarbon having 2-10 carbon atoms, an ether, or an alkenyl group having 2-10 carbon atoms and R₂ is a hydrocarbon having 2-10 carbon atoms, an ether, or an alkenyl group having 2-10 carbon atoms.

In preferred formulations, R₁ is an ether of the formula - R₃-O-R₄- wherein R₃ and R₄ are chosen from alkyl or alkenyl groups having 2-10 carbon atoms. In a preferred formulation, R₂OH is an iso-substituted alcohol substituent.

Bromine has proven to be an effective halogen for the X substituents, probably due to its limited reactivity when compared with chlorine and fluorine.

One compatibility agent which has been used in compositions exhibiting superior physical properties and low brittle points has the general formula 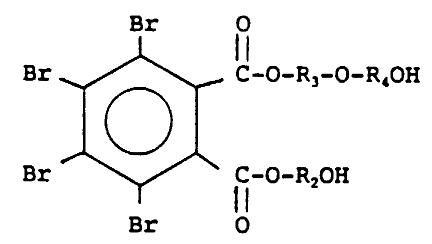 wherein R₃ and R₄ are aliphatic hydrocarbons having 2-10 carbon atoms, preferably alkanes, and R₂ is an aliphatic hydrocarbon chain having 2-10 carbon atoms.

One compatibility agent which has been tested and proven to provide compositions having desirable qualities, is a derivative of tetrabromophthalic anhydride diol which has the formula 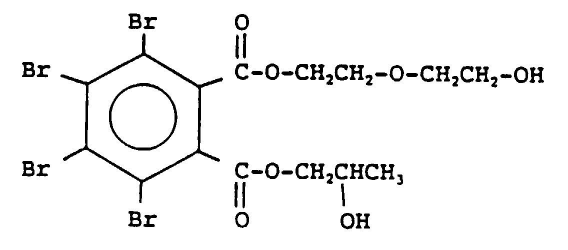 This compound has the nomenclature 3,4,5,6 tetrabromophthalic 1,2 benzene dicarboxylic acid mixed esters with diethylene glycol and 1,2 dihydroxy propylene glycol and is available as PTH-4 Diol from Great Lakes Chemical Corporation, West Lafayette, Indiana.

Derivatives of tetrabromophthalic anhydride diol are useful in amounts of 1 to 20 parts, preferably 4-10 parts. Particular compositions comprising 5 and 7 parts of the derivatives have produced fluorohydrocarbon-fluorosilicone (polydimethylsiloxane) copolymers having brittle points of -35°C and -42°C.

The compatibility agent is particularly useful with the blends of fluorohydrocarbons and fluorosilicones used according to the present invention. The diol is soluble in the blends due to the ether linkages and is not attacked by aliphatics and aromatics. Thus, the diol is not destroyed in the reaction of the polymers. It is believed that the diol acts as an interfacial wetting agent which is compatible by itself with either the fluorohydrocarbon or the fluorosilicone which are generally not compatible with each other. The diol is soluble in either fluoro-compound and facilitates their cross-linking. In general, halogenated ethers are soluble in either.

Through the addition of the diol to the fluorohydrocarbon-fluorosilicone blends, lower modulus and higher tear strengths can be achieved. In particular, high tensile strengths of between 1,800 and 2,000 are obtainable and an elongation of 300% or better may be achieved. Durometer ranges of 70-80 may also be achieved to provide compositions particularly useful in automotive applications.

The fluorohydrocarbons used in the blends according to the present invention preferably comprise a medium viscosity fluoroelastomer raw gum that is capable of being cross-linked by peroxide vulcanizing agents. These fluorohydrocarbone offer improved resistance to water and steam over conventional fluoroelastomers. These fluorohydrocarbons also offer advantages in vulcanizing thick cross-section parts without fissuring as the type and quantity of volatiles liberated during cure are different from those associated with conventional fluoroelastomer cure systems. The fluorohydrocarbons should also be capable of curing with conventional diamine or dihydroxide cure systems.

Typical properties of the fluorohydrocarbon gumstock include a specific gravity of approximately less than 2.0, preferably about 1.8, a partial solubility in low molecular weight esters and ketones and a Mooney viscosity of approximately 50-60.

The fluorohydrocarbon elastomer may be mixed with curative, fillers and other compounding ingredients by conventional mill or internal mixing methods. Preferably, a peroxide curing agent and co-agent are preblended with the dry powders prior to adding to the gum on the mill or in an internal mixer. Temperatures above 121°C should be avoided during mixing. After mixing, the mixture should be cooled rapidly by either air or water cooling techniques, and stored in a cool dry place prior to use.

The fluorohydrocarbon is used in blends with fluorosilicones to obtain compositions having a combination of good physical properties, heat and fluid resistance, and low temperature brittle pointe. These compounds are extremely useful in automotive applications where the heat and chemical resistance of fluoroelastomers is required along with improved low temperature performance.

Preferred vinyl containing polymer or polymers used according to the present invention are high molecular weight polymers such as long chain polymers which are vinyl terminated and have vinyl-on-chain such that the total vinyl content is between 0.1 to 0.3, preferably 0.10 to 0.30 weight percent based upon compound weight, more preferably, a total vinyl of 0.13 to 0.20 weight percent based upon compound weight. In preferred embodiments, the total vinyl weight of the silicone polymers has shown advantageous results at 0.13 weight percent and 0.15 weight percent.

In place of a single vinyl containing polymer, a mixture of vinyl terminated high molecular weight fluorosilicone polymer and vinyl terminated/vinyl-on-chain high molecular weight silicone polymer may be used. When such mixtures are used, between about 38% and 45% vinyl terminated/vinyl-on-chain polymer is used compared to 62-55% of only vinyl terminated fluorosilicones by parts. It is expected that 50:50 mixtures of vinyl terminated and vinyl terminated/vinyl-on-chain polymers may be used. When mixtures of these two types of fluorosilicones are used, the total weight of vinyl is generally less. For example, total vinyl weights percent of 0.13 to 0.20 weight percent may be used, whereas total vinyl weights of 0.13 to 0.16 weight percent are preferred.

Cross-linking reactions between the fluorohydrocarbons and fluorosilicones can be catalyzed or initiated by any of various free radical generating initiators. Initiators should be chosen in order to control the Durometer hardness of the final blend. Vinyl specific free radical initiators are necessary for crosslinking via the vinyl units. The most preferred vinyl specific free radical initiators are peroxide initiators. Dibenzoyl peroxide is most commonly used, however, any well known peroxide initiator compatible with the blends can be used, such as those shown in the "Handbook of Silicone Rubber Fabrication", Wilfred Lynch, 1978, Litton Educational Publishing, Inc., page 37, which disclosure is hereby incorporated by reference.

The fluorohydrocarbon and fluorosilicone can be mixed with the compatibility agent before adding any other components to the blend. The basic mixture can be stored and modified later or used as is once an initiator is added. To improve physical properties, a fumed silica filler is added along with telomeric fluid to make the filler compatible. One untreated filler is a fumed silica having a surface area of about 200 m²/gm available from Cabot Corporation, Tuscola, Illinois under the tradename Cab-O-Sil MS-7 ®. Treated fillers may also be used such as Aerosil R-972® available from Degussa Corporation, Waterford, N.Y. This filler has a surface area of about 120 m²/gm and has been treated with dimethyldichlorosilane. The treatment ties up free silanol bonds on the silica to form non-reactive siloxane groups, i.e. dimethylsiloxy bridging groups.

Other agents may also be added such as small amounts of an acid acceptor, metal oxide, plasticizer, silazane, and other materials. The acid acceptor, e.g., Ca(OH)₂ soaks up acid liberated from the removal of HX from the fluorohydrocarbon to generate a site of unsaturation for curing. This acid would otherwise cause cleavage of the product chains.

It has been found particularly advantageous to add about 5 or 6 parts of an M stopped PDMS having about 12-15 M% vinyl-on-chain to increase the flexibility of the blend. The vinyl-on-chain fluorosilicone additive may comprise up to 10 parts of the total blend. Ranges of 3 to 7 are more preferred, 5 to 7 parts being most preferred.

The blends according to the present invention may be prepared through mixing in a high intensity mixer, such as a Banbury mixer to facilitate compounding. The blends are then subject to a cook cycle in a doughmixer to complete the in-situ treatment of the filler, which in most cases is fumed silica. As discussed above, the silica filler may be added subsequent to preparing fluorohydrocarbon and fluorosilicone blends with a compatibility agent. Example 1 shows a typical method for preparing blends of fluorocarbons and fluorosilicones in accordance with both the prior art and the present invention.

### EXAMPLE I

A Banbury mixer was charged with a fluorohydrocarbon HMW polymer (70 grams), 30.0 grams of a vinyl terminated fluorosilicone HMW polymer with a Williams Plasticity (WP) of 200 +/- 20 determined from a three minute reading at 25°C, 3.0 grams of a vinyl terminated fluorosilicone HMW polymer with 1.4 wgt % vinyl-on-chain along with about 15% of the total amount of fumed silica filler to be used. Approxiamately 29.0 grams of filler are used in the process. The silica filler was Cab-O-sil MS-7®. The batch was mixed for 2 minutes before adding 0.15 grams of divinyltetramethyldisilazane. The mixture was again sheared for 2 minutes then another 15% of the fumed silica charge was added along with 2.7 grams (50%) of the fluorosiliconedisiloxanol telomeric fluid. The mixture was sheared for 5 minutes before adding 7.0 grams of an M stopped PDMS containing 13.2M% VOC and another 15% of the fumed silicone charge. After 4 minutes of shear, another 15% of the filler was added then sheared again before adding the balance of the fumed silica. Once the balance of fumed silica was added, the batch was sheared for 40 minutes then dumped. The masterbatch was placed in a doughmixer and heated for 2 hours at 160-170°C while maintaining a N₂ purge rate of 0.34 m³/h (12 ft³/hr). The system was cooled down to 50°C and placed in the Banbury where 1.9 grams of Ca(OH)₂ per 100 of compound and 0.63 gram of a masterbatch having 75 wt % Ce(OH)₄ dispersed in Viscosil® 60,000 cps (from General Electric Company, Waterford, N.Y.) per 100 of compound were added. The system was then sheared for 2 minutes before 0.76 gram per 100 of compound of triallylisocyanurate was added. After 3 more minutes of shear, the batch was cooled to 50°C and dumped into a mill where 0.95 part of Lupersol 101(2,5-Dimethyl-2,5-di(tert-butylperoxy) hexane from Lucidol Div...) Pennwalt Corp.) was added. Table 1 shows the properties of this composition.

**TABLE 1**

| EXAMPLE | I |
|---|---|
| SHORE A | 81 |
| 100% MODULUS, (PSI) KPa | (935) 6451 |
| TENSILE, (PSI) KPa | (1150) 7935 |
| ELONGATION, % | 190 |
| DIE B TEAR, (PPI) Kg/m | (170) 3036 |
| SPG | 1.630 |

The compounds of Examples II, III and IV were made according to processes similar to those of Example I. Table 2 shows the compositions and property profiles for Examples II, III and IV. Some compounds were replaced with other similar components. The brittle points of the various compositions herein were determined from ASTM test method D 746 which is a standard method for brittleness testing by impact. The method is described in ASTM Vol. 08.01, 1991, pages 240-243.

### EXAMPLES II, III and IV

| COMPONENT | II | III | IV |
|---|---|---|---|
| MEDIUM VISCOSITY FLUOROELASTOMER RAW GUM | 80 | 60 | 60 |
| FLUOROSILICONE HMW POLYMER | 20 | 40 | 40 |
| MAPICO-TAN 297® (Coloring agent from Kenrich Petrochemicals, Inc., Bayonne, New Jersey) | - | - | 2.5 |
| AEROSIL R-972® | 20 | 20 | 15 |
| CAB-O-SIL HS-5® | 6.5 | 6.5 | - |
| Ca(OH)₂ | 3.0 | 3.0 | - |
| LUPERCO 101XL (2,5-DIMETHYL HEXANE FROM LUCIDOL DIV., PENNWALT CORP.) | 1.3 | 1.3 | 1.4 |
| TRIALLYLISOCYANURATE | 1.1 | 1.2 | 1.6 |

- CURE:: 15 MIN/177°C (350°F)
- POST CURE:: 15 HR/200°C (392°)

**TABLE 2**

| PROPERTY PROFILE | | | |
|---|---|---|---|
| EXAMPLE | II | III | IV |
| SHORE A | 83 | 79 | 63 |
| 100% MODULUS | 740 | 660 | 320 |
| TENSILE | 2160 | 1580 | 1390 |
| ELONGATION | 290 | 235 | 330 |
| SPG | 1.73 | 1.66 | 1.63 |
| BRITTLE POINT °C | -30 | -43 | -53 |

### EXAMPLES V-IX

Examples V-IX were made in a similar manner. The ratios of the polymers and other additives varied

| | V | VI | VII | VIII | IX |
|---|---|---|---|---|---|
| Fluorohydrocarbon | 75 | 75 | 80 | 80 | 80 |
| Fluorosilicone HMW Polymer Vinyl Terminated | 15 | 15 | 13 | 11 | 11 |
| Fluorosilicone HMW Polymer with Vinyl on chain ends & on chain-total Vi + 0.07 wgt % | 10 | 10 | 8 | 9 | 9 |
| M Stopped PDMS with 13.2M% VOC | 7.0 | 7.0 | 5 | 6 | 5 |
| Fluorosilicone disiloxanol telomeric fluid | 5.4 | 5.4 | 10.4 | 11.0 | 11.0 |
| Vinyl terminated PDMS plasticizer | 3 | 3 | - | - | - |
| Divinyltetramethyldisilazane | 0.15 | 0.15 | 0.15 | 0.2 | 0.2 |
| GAP-D (Gamma aminopropyltrimethoxysilane) | 0.5 | 0.5 | 0.5 | 1.0 | - |
| Kynar (polyvinylidene fluoride) | - | 5 | 5 | 5 | 3 |
| Tetrabromophthalic anhydride diol | - | - | 5 | 7 | 7 |
| Fumed silica 200 m²/gram surface area | 29 | 29 | 29 | 29 | 29 |
| Ca(OH)₂ | 3.0 | 3.0 | 4.0 | 4.0 | 6.2 |
| Ce(OH)₄MBX | 1.0 | 1.0 | 1.0 | 1.0 | 1.5 |
| Ta1C [NAME, COMPANY] | 1.0 | 1.0 | 1.0 | 0.8 | 1.2 |
| Lupersol 101 | 1.5 | 1.5 | 1.8 | 1.8 | 2.9 |
| Total Vi weight percent | 0.20 | 0.19 | 0.13 | 0.15 | 0.15 |

All compounds were press cured 15 min/177°C then post baked for 16 hours/200°C. Table 3 shows the property profiles of these compounds. Compounds VII, VIII and IX, which contained the compatibility agent PTH-4 diol, displayed higher values in modulus, tensile, tear and elongation.

**TABLE 3**

| PROPERTY PROFILE | | | | | |
|---|---|---|---|---|---|
| EXAMPLE | V | VI | VII | VIII | IX |
| SHORE A | 71 | 72 | 82 | 81 | 84 |
| 100% MODULUS, (PSI) KPa | (610) 4209 | (690) 4761 | (790) 5451 | (980) 6762 | (850) 5865 |
| TENSILE, (PSI) KPa | (1565) 10799 | (1575) 10868 | (1880) 12972 | (2060) 14214 | (1825) 12593 |
| ELONGATION, % | 280 | 250 | 300 | 280 | 285 |
| DIE B TEAR, PPI Kg/m | (180) 3214 | - | (265) 4732 | (225) 4018 | (195) 3482 |
| SPG | 1.665 | 1.666 | 1.719 | 1.716 | 1.715 |
| BRITTLE PT. °C | -31 | -32 | -36 | -35 | -33 |

### EXAMPLE X

A fluorohydrocarbon-fluorosilicone PDMS copolymer blend was prepared in a similar manner. The fluorosilicone PDMS copolymer was vinyl terminated and had vinyl-on-chain, the aggregate vinyl value being 0.04 wgt %. The Williams plasticity of the copolymer was 180. The formulation for this particular compound is as follows:

| COMPOUND X | |
|---|---|
| Medium Viscosity fluoroelastomer raw gum | 640 grams |
| Vinyl Terminated FS HMW Polymer | 88 grams |
| FS-PDMS | 72 grams |
| Divinyltetramethyldisilazane | 1.6 grams |
| M-Stopped PDMS with 13.2M% VOC | 40.0 grams |
| Fluorosilicone Disiloxanol Telomeric Fluid | 88.0 grams |
| Polyvinylidene fluoride | 24 grams |
| Tetrabromophthalic anhydride diol | 56 grams |
| Fumed silica 200m²/gm | 232 grams |
| Calcium Hydroxide | 32 grams |
| Cerium Hydroxide masterbatch | 8.0 grams |
| Triallylisocyanurate | 6.4 grams |

The resultant Compound X was catalyzed with Lupersol 101 R (0.5 grams/100 of compound) then press cured 15min/1770°C and post baked for 16 hours at 200°C. Table 4 shows the property profile of Compound X.

**TABLE 4**

| PROPERTY PROFILE | |
|---|---|
| EXAMPLE | X |
| SHORE A | 85 |
| 100% MODULUS, (PSI) KPa | (860) 5934 |
| TENSILE, (PSI) KPa | (1620) 11178 |
| ELONGATION, % | 225 |
| DIE B TEAR, (PPI) Kg/m | (220) 3929 |
| SPG | 1.740 |
| COMPRESSION SET (METHOD B) 22 HRS/177°C, % | 29.6 |
| BRITTLE POINT °C | -41 |

The utilization of FHC-FSPDMS copolymer blends according to the present invention provide compositions having brittle points to -35°C which exhibit good physical properties. These types of blends are useful for O-rings in automotive applications due to their toughness and resistance to abrasion.

The compounds of the present invention have further proven to be flame retardant when subjected to burn tests. Compositions having about 3.7 parts by weight of the derivative of tetrabromophthalic anhydride diol have shown very little consumption. Compounds having about 7.0 parts by weight of the derivative have shown extinguishing times of less than 1 second. Tables 5, 6 and 7 show test results of various burn tests. The compositions having zero percent of the derivative had first and second burn times of 7 and 115 seconds, respectively, and a consumption of 100 percent. Base compound 4, which had 1.6 parts per weight derivative, had comparable burn times and also a 100 percent consumption, as is shown in Table 5.

| BURN TEST MEASUREMENT COMPOSITIONS | | | | | | | |
|---|---|---|---|---|---|---|---|
| Base Compound | 1 | 2 | 3 | 4 | 5 | 6 | 7 |
| Fluorohydrocarbon | 33 | 70 | 51 | 33 | 51 | 58 | 64 |
| Fluorosilicone HMW Polymers | 67 | 30 | 49 | 67 | 27 | 14 | 36 |
| Fluorosilicone-PDMS copolymers | - | - | - | - | 22 | 28 | - |
| M-stopped pdms PDMS with 13.4m% vinyl on chain | 0.4 | 5 | 5 | 5 | 3 | 3 | 0 |
| Tetrabromophthalic anhydride diol | 0 | 7.0 | 3.7 | 1.6 | 3.7 | 3.7 | 7.0 |

**TABLE 5**

| MODIFIED UL 94 BURN TEST: TWO IGNITIONS - 10 SECONDS EACH | | | | | | | |
|---|---|---|---|---|---|---|---|
| Base Compound | 1 | 2 | 3 | 4 | 5 | 6 | 7 |
| Extinguishing Time (Seconds) | | | | | | | |
| 1st Burn | 7.0 | 0 | 0.5 | 6.5 | 0.5 | 0.5 | 0 |
| 2nd Burn | 115 | 0 | 5.0 | 62 | 10.0 | 1.5 | 1 |
| Consumption (%) | 100 | 1.0 | 0.5 | 100 | 1.6 | 0.5 | 9 |

**TABLE 6**

| UL 94 BURN TEST: THREE IGNITIONS, TWO AT 6.0 SECONDS AND ONE FOR 15 SECONDS | | | | | | | |
|---|---|---|---|---|---|---|---|
| Base Compound | 1 | 2 | 3 | 4 | 5 | 6 | 7 |
| Extinguishing Time (Seconds) | | | | | | | |
| 1st Burn | - | 1.0 | - | - | - | - | - |
| 2nd Burn | - | 1.0 | - | - | - | - | - |
| 3rd Burn | - | 1.0 | - | - | - | - | - |
| Consumption (%) | - | <1.0 | - | - | - | - | - |

**TABLE 7**

| BOEING D6-8099 This test employs a 7.62 cm (3-inch) by 15.24 cm (6-inch) by 19.05 mm (0.75-inch) strip which has been press cured for 10 min. at 177°C (350°F) under 51.75 KPa (705 psi) pressure, then post baked at 204°C (400°F) in an air circulating oven for 16 hours. The strip prepared in this manner is then exposed to methane gas flame until ignition for the time stated or up to a maximum of 60 seconds. | | | | | | | |
|---|---|---|---|---|---|---|---|
| Extinguishing Times (Seconds) This is the time measured from the time the methane flame is removed until the flame on the strip extinguishes. | | | | | | | |
| Base Compound | 1 | 2 | 3 | 4 | 5 | 6 | 7 |
| Ignition Times | | | | | | | |
| First Trial (12 seconds) | - | 2.6 | - | - | 0.6 | - | - |
| Second Trial (15 seconds) | - | 1.6 | - | - | 0.6 | - | - |
| First Trial (60 seconds) | - | - | - | - | - | 1.0 | - |
| Second Trial (15 seconds) | - | - | - | - | - | 0.9 | - |
| First Trial (12 seconds) | - | - | - | - | - | - | 1.0 |
| Consumption (%) | - | <1.0 | - | - | <1.0 | <1.0 | <1.0 |

Although the present invention has been described in connection with preferred embodiments, it will be appreciated by those skilled in the art that additions, modifications, substitutions and deletions not specifically described may be made without departing from the spirit and scope of the invention defined in the appended claims.

## Claims

1. A fluorohydrocarbon-fluorosilicone blend having a brittle point of less than -30°C, comprising 50-80 parts by weight of a fluorohydrocarbon, 20-50 parts by weight of a high molecular weight fluorosilicone polymer having a total vinyl weight content in the range of 0.1 to 0.3 weight percent and from 1-20 parts by weight of a compatibility agent of the general formula 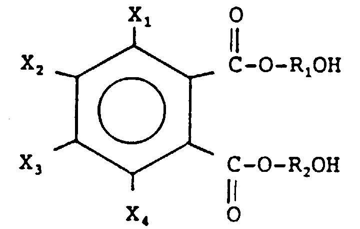 wherein X₁,X₂,X₃, and X₄ are halogens;
R₁ is selected from the group consisting of a hydrocarbon having 2-10 carbon atoms, and an ether having 2-20 carbon atoms and mixtures thereof; and
R₂ is selected from the group consisting of a hydrocarbon having 2-10 carbon atoms and an ether having 2-20 carbon atoms and mixtures thereof.

2. A composition as defined in claim 1, wherein R₁ is an ether and R₂ is an aliphatic straight-chain hydrocarbon.

3. A composition as defined in claim 1 or Claim 2, wherein X₁, X₂, X₃, and X₄ are each bromine.

4. A composition as defined in any preceding claim, wherein said compatibility agent is a derivative of tetrabromophthalic anhydride diol having the formula

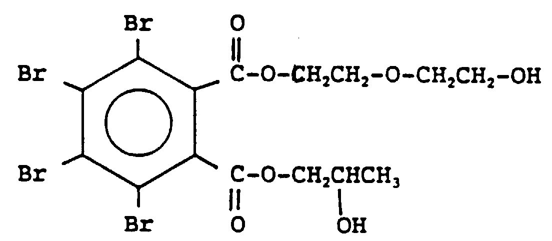

5. A composition as defined in any preceding claim, wherein said high molecular weight fluorosilicone polymer comprises both a vinyl terminated high molecular weight fluorosilicone polymer and a vinyl terminated/vinyl-on-chain high molecular weight fluorosilicone polymer.

6. A composition as defined in claim 5, wherein said vinyl terminated/vinyl-on-chain high molecular weight fluorosilicone polymer comprises 38-50 weight % of said fluorosilicone polymer.

7. A composition as defined in any preceding claim, further comprising between 1 and 10 parts by weight of an M stopped polydimethylsiloxane having up to 15 weight % vinyl-on-chain substituents.

8. A composition as defined in any preceding claim, further comprising up to 50% fumed silica filler and up to 15% of a fluorosilicone disiloxanol telomeric fluid.

9. A fluorohydrocarbon-fluorosilicone blend having a brittle point of less than -30°C, comprising 50-80 parts by weight of a fluorohydrocarbon having a Mooney [ML 1+10 @ 25°F (121°C)] viscosity in the range of approximately 50-60, 20-50 parts by weight of a high molecular weight fluorosilicone and PDMS polymers having a total compound vinyl weight content in the range of 0.13 to 0.20 weight percent, and from 1-20 parts by weight of a compatibility agent of the general formula 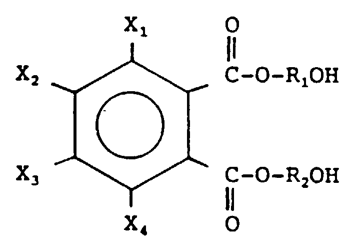 wherein X₁,X₂,X₃, and X₄ are halogens;
R₁ is selected from the group consisting of a hydrocarbon having 2-10 carbon atoms, and an ether having 2-20 carbon atoms and mixtures thereof; and
R₂ is selected from the group consisting of a hydrocarbon having 2-10 carbon atoms and an ether having 2-20 carbon atoms and mixtures thereof.

10. An O-ring comprising a fluorohydrocarbon-flucrosilicone blend having a brittle point of less than -30°C, comprising 50-80 parts by weight of a fluorohydrocarbon, 20-50 parts by weight of a high molecular weight fluorosilicone polymer having a total vinyl weight content in the range of 0.1 to 0.3 weight percent, and from 1-20 parts by weight of a compatibility agent of the general formula 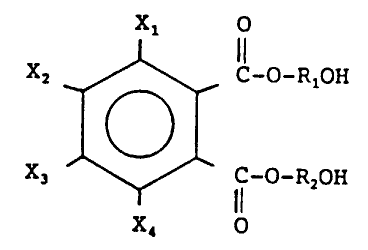 wherein X₁,X₂,X₃, and X₄ are halogens;
R₁ is selected from the group consisting of a hydrocarbon having 2-10 carbon atoms, and an ether having 2-20 carbon atoms and mixtures thereof; and
R₂ is selected from the group consisting of a hydrocarbon having 2-10 carbon atoms and an ether having 2-20 carbon atoms and mixtures thereof.

## Patentansprüche

1. Mischung aus Fluorkohlenwasserstoff und Fluorsilicon mit einer Versprödungstemperatur von weniger als -30°C, umfassend 50 bis 80 Gewichtsteile eines Fluorkohlenwasserstoffes, 20 bis 50 Gewichtsteile eines Fluorsilicon-Polymers hohen Molekulargewichtes mit einem gesamten Vinyl-Gewichtsgehalt im Bereich von 0,1 bis 0,3 Gew.-% und 1 bis 20 Gewichtsteile eines Verträglichkeitsmittels der allgemeinen Formel 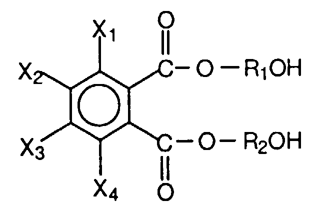 worin X₁, X₂, X₃ und X₄ Halogen sind,
R₁ ausgewählt ist aus der Gruppe bestehend aus einem Kohlenwasserstoff mit 2 bis 10 Kohlenstoffatomen und einem Ether mit 2 bis 20 Kohlenstoffatomen und deren Mischungen und
R₂ ausgewählt ist aus der Gruppe beste-hend aus einem Kohlenwasserstoff mit 2 bis 10 Kohlenstoffatomen und einem Ether mit 2 bis 20 Kohlenstoffatomen und deren Mischungen.

2. Zusammensetzung nach Anspruch 1, worin R₁ ein Ether und R₂ ein geradkettiger, aliphatischer Kohlenwasserstoff ist.

3. Zusammensetzung nach Anspruch 1 oder 2, worin X₁, X₂, X₃ und X₄ jeweils Brom sind.

4. Zusammensetzung nach einem vorhergehenden Anspruch, worin das Verträglichkeitsmittel ein Derivat von Tetrabromphthalsäureanhydriddiol der Formel ist

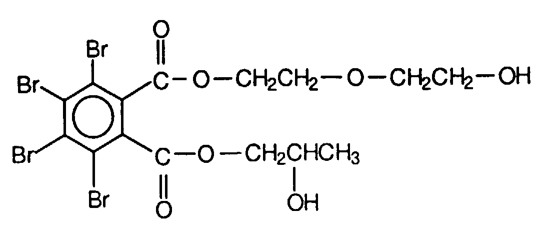

5. Zusammensetzung nach einem vorhergehenden Anspruch, worin das Fluorsilicon-Polymer hohen Molekulargewichtes sowohl ein Vinyl-Endgruppen aufweisendes Fluorsilicon-Polymer hohen Molekulargewichtes als auch ein Fluorsilicon-Polymer hohen Molekulargewichtes mit Vinyl-Endgruppen und Vinylgruppen in der Kette umfaßt.

6. Zusammensetzung nach Anspruch 5, worin das Fluosilicon-Polymer hohen Molekulargewichtes mit Vinyl-Endgruppen und Vinylgruppen in der Kette 38 bis 50 Gew.-% des Fluorsilicon-Polymers umfaßt.

7. Zusammensetzung nach einem vorhergehenden Anspruch, weiter umfassend zwischen 1 und 10 Gewichtsteile eines M-Endgruppen aufweisenden Polydimethylsiloxans mit bis zu 15 Gew.-% Vinylsubstituenten in der Kette.

8. Zusammensetzung nach einem vorhergehenden Anspruch, weiter umfassend bis zu 50% Füllstoff aus pyrogenem Siliciumdioxid und bis zu 15% einer telomeren Fluorsilicon-Disiloxanol-Flüssigkeit.

9. Mischung aus Fluorkohlenwasserstoff und Fluorsilicon mit einer Versprödungstemperatur von weniger als -30°C, umfassend 50 bis 80 Gewichtsteile eines Fluorkohlenwasserstoffes mit einer Mooney [ML 1+10 bei 25°F (121°C)] Viskosität im Bereich von etwa 50-60, 20 bis 50 Gewichtsteile eines Fluorsilicon- und PDMS-Polymers hohen Molekulargewichtes mit einem gesamten Vinyl-Gewichtsgehalt im Bereich von 0,13 bis 0,20 Gew.-% und 1 bis 20 Gewichtsteile eines Verträglichkeitsmittels der allgemeinen Formel 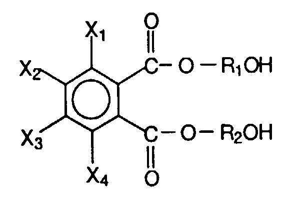 worin X₁, X₂, X₃ und X₄ Halogen sind,
R₁ ausgewählt ist aus der Gruppe bestehend aus einem Kohlenwasserstoff mit 2 bis 10 Kohlenstoffatomen und einem Ether mit 2 bis 20 Kohlenstoffatomen und deren Mischungen und
R₂ ausgewählt ist aus der Gruppe beste-hend aus einem Kohlenwasserstoff mit 2 bis 10 Kohlenstoffatomen und einem Ether mit 2 bis 20 Kohlenstoffatomen und deren Mischungen.

10. O-Ring, umfassend eine Mischung aus Fluorkohlenwasserstoff und Fluorsilicon mit einer Versprödungstemperatur von weniger als -30°C, umfassend 50 bis 80 Gewichtsteile eines Fluorkohlenwasserstoffes, 20 bis 50 Gewichtsteile eines Fluorsilicon-Polymers hohen Molekulargewichtes mit einem gesamten Vinyl-Gewichtsgehalt im Bereich von 0,1 bis 0,3 Gew.-% und 1 bis 20 Gewichtsteile eines Verträglichkeitsmittels der allgemeinen Formel 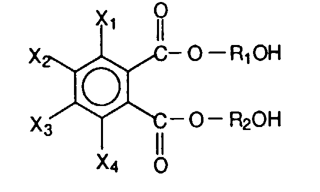 worin X₁, X₂, X₃ und X₄ Halogen sind,
R₁ ausgewählt ist aus der Gruppe bestehend aus einem Kohlenwasserstoff mit 2 bis 10 Kohlenstoffatomen und einem Ether mit 2 bis 20 Kohlenstoffatomen und deren Mischungen und
R₂ ausgewählt ist aus der Gruppe beste-hend aus einem Kohlenwasserstoff mit 2 bis 10 Kohlenstoffatomen und einem Ether mit 2 bis 20 Kohlenstoffatomen und deren Mischungen.

## Revendications

1. Mélange de fluorohydrocarbure et de fluorosilicone, dont le point de rupture fragile est inférieur à -30°C et qui contient de 50 à 80 parties en poids d'un fluorohydrocarbure, de 20 à 50 parties en poids d'un polymère de type fluorosilicone à masse moléculaire élevée et contenant au total de 0,1 à 0,3 % en poids de groupes vinyle, et de 1 à 20 parties en poids d'un agent de compatibilisation de formule générale 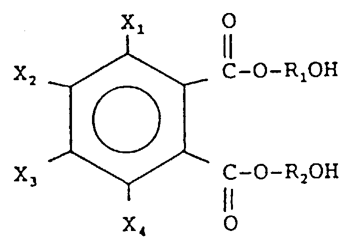 dans laquelle
X₁, X₂, X₃ et X₄ représentent des atomes d'halogène,
R₁ est choisi dans l'ensemble constitué par les groupes hydrocarbonés comportant de 2 à 10 atomes de carbone, les groupes à fonction éther comportant de 2 à 20 atomes de carbone et leurs mélanges, et
R₂ est choisi dans l'ensemble constitué par les groupes hydrocarbonés comportant de 2 à 10 atomes de carbone, les groupes à fonction éther comportant de 2 à 20 atomes de carbone et leurs mélanges.

2. Composition conforme à la revendication 1, dans laquelle R₁ représente un groupe à fonction éther et R₂ représente un groupe hydrocarboné aliphatique linéaire.

3. Composition conforme à la revendication 1 ou 2, dans laquelle X₁, X₂, X₃ et X₄ représentent chacun un atome de brome.

4. Composition conforme à l'une des revendications précédentes, dans laquelle ledit agent de compatibilisation est un dérivé diol de l'anhydride tétrabromophtalique, de formule

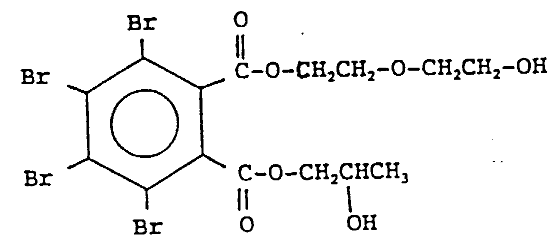

5. Composition conforme à l'une des revendications précédentes, dans laquelle ledit polymère de type fluorosilicone à masse moléculaire élevée comprend à la fois un polymère de type fluorosilicone à masse moléculaire élevée et portant des groupes vinyle en bout de chaîne et un polymère de type fluorosilicone à masse moléculaire élevée et portant des groupes vinyle en bout de chaîne et au sein de la chaîne.

6. Composition conforme à la revendication 5, dans laquelle ledit polymère de type fluorosilicone à masse moléculaire élevée et portant des groupes vinyle en bout de chaîne et au sein de la chaîne constitue de 38 à 50 % en poids dudit polymère de type fluorosilicone.

7. Composition conforme à l'une des revendications précédentes, qui contient en outre de 1 à 10 parties en poids d'un polydiméthylsiloxane à extrémités de type M et portant jusqu'à 15 % en poids de substituants vinyle au sein de la chaîne.

8. Composition conforme à l'une des revendications précédentes, qui contient en outre jusqu'à 50 % de silice fumée utilisée comme charge et jusqu'à 15 % d'un fluide télomère de type fluorosilicone-disiloxanol.

9. Mélange de fluorohydrocarbure et de fluorosilicone, dont le point de rupture fragile est inférieur à -30°C et qui contient de 50 à 80 parties en poids d'un fluorohydrocarbure dont la viscosité Mooney [ML 1+10 à 250°F (121°C)] vaut approximativement de 50 à 60, de 20 à 50 parties en poids de polymères de types PDMS et fluorosilicone à masse moléculaire élevée et contenant au total de 0,13 à 0,20 % en poids de groupes vinyle, et de 1 à 20 parties en poids d'un agent de compatibilisation de formule générale 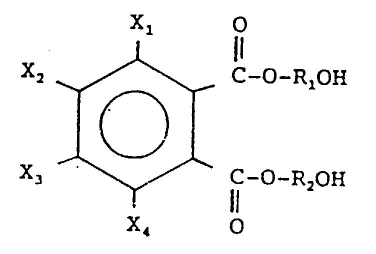 dans laquelle
X₁, X₂, X₃ et X₄ représentent des atomes d'halogène,
R₁ est choisi dans l'ensemble constitué par les groupes hydrocarbonés comportant de 2 à 10 atomes de carbone, les groupes à fonction éther comportant de 2 à 20 atomes de carbone et leurs mélanges, et
R₂ est choisi dans l'ensemble constitué par les groupes hydrocarbonés comportant de 2 à 10 atomes de carbone, les groupes à fonction éther comportant de 2 à 20 atomes de carbone et leurs mélanges.

10. Anneau en O constitué d'un mélange de fluorohydrocarbure et de fluorosilicone dont le point de rupture fragile est inférieur à -30°C et qui contient de 50 à 80 parties en poids d'un fluorohydrocarbure, de 20 à 50 parties en poids d'un polymère de type fluorosilicone à masse moléculaire élevée et contenant au total de 0,1 à 0,3 % en poids de groupes vinyle, et de 1 à 20 parties en poids d'un agent de compatibilisation de formule générale 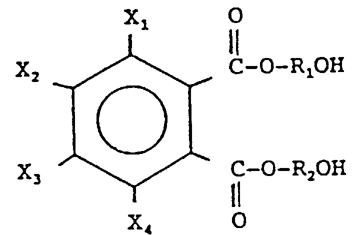 dans laquelle
X₁, X₂, X₃ et X₄ représentent des atomes d'halogène,
R₁ est choisi dans l'ensemble constitué par les groupes hydrocarbonés comportant de 2 à 10 atomes de carbone, les groupes à fonction éther comportant de 2 à 20 atomes de carbone et leurs mélanges, et
R₂ est choisi dans l'ensemble constitué par les groupes hydrocarbonés comportant de 2 à 10 atomes de carbone, les groupes à fonction éther comportant de 2 à 20 atomes de carbone et leurs mélanges.
